# EUROPEAN PATENT APPLICATION

(11) **EP 2 042 536 A1**
(43) Date of publication of application: **01.04.2009**
(21) Application number: 07075825.5
(22) Date of filing: 20.09.2007
(51) Int. Cl.: C08G 59/00, C08G 59/18, C08G 59/40, C08G 18/79, C08G 63/183, C08G 63/20, C08G 63/91, C09D 163/00, C09D 175/06

(54) **Hydroxyl polyester resins for dye ink sublimation**

(71) Applicant: Hexion Specialty Chemicals Research Belgium S.A., 1348 Ottignies Louvain la Neuve (BE)
(72) Inventor: Beccaria, Damiano, 12040 Sant'Albano Stura CN (IT); Capra, Andrea, 12040 Sant'Albano Stura CN (IT); Bejko, Imir, 12040 Sant'Albano Stura CN (IT); Munari, Alessandro, 12040 Sant'Albano Stura CN (IT); Carlevaris, Lino Natale, 12040 Sant'Albano Stura CN (IT)

(57) **Abstract**

The present invention relates to a thermally curable powder coating composition based on hydroxy functional polyester resins with a high hydroxyl value blended with a low hydroxyl value resin and both cured with a self blocked uretdione, and its use in the preparation of a decorated substrate, by transfer printing.

The transfer printing comprises the steps of: submitting a substrate to a treatment to prepare its surface for the application of a coating, applying a coating to the surface of the substrate in one or more cycles, covering the surface of the substrate with a sheet comprising a decoration which is to be transferred to said surface, and heating the substrate and the sheet comprising the decoration to effect the transfer of the decoration from the sheet onto the substrate.

## Description

The present invention relates to a thermally curable powder coating composition based on hydroxy functional polyester resins with a high hydroxy value blended with a low hydroxy value resin and both cured with a self blocked uretdione, and its use in the preparation of a decorated substrate, by transfer printing. The transfer printing comprises the steps of: submitting a substrate to a treatment to prepare its surface for the application of a coating, applying a coating to the surface of the substrate in one or more cycles, covering the surface of the substrate with a sheet comprising a decoration which is to be transferred to said surface, and heating the substrate and the sheet comprising the decoration to effect the transfer of the decoration from the sheet onto the substrate.

Such a process is known from patent application EP 0 817 728 , which is directed to a process and the relevant apparatus for making decorated, extruded, profiled elements.

EP 1 162 241 is about a powder coating composition comprising a mixture of resins wherein at least one resin has a hydroxy number of less than 75 mg KOH/g, at least one resin has a hydroxy number of at least 75 mg KOH/g, and a curing agent for the resins. The curing agents used are iscocyanate-functional products that are under environmental pressure due to their toxicological aspects.

In US 3,907,974 curable decorating systems for glass or metal containers using a heat transfer decoration are disclosed.

In WO 98/08694 a process is disclosed for decorating metal, plastic or the like materials. In this publication very little information is given on the material used to coat the surface of the substrate.

It was found that the resin used to coat the substrate before the transfer printing step is of the utmost importance to the properties and appearance of the decorated substrate.

The decorated substrate should have good mechanical properties (e.g. scratch resistance, Tg of the cured film, gloss, weathering and adhesion to the substrate), the image should be transferred completely in the transfer printing process, and the image's support (normally paper) should detach easily after transfer of the image.

The industry is still looking for a system that has no environmental issue and that could fulfill the entire technical requirement for decorated substrate by transfer printing.

It was found that powder coating composition based on hydroxy functional polyester resins with a high hydroxy value blended with a low hydroxy value resin and cured with a self blocked uretdione, solves the above problems for its use in the preparation of a decorated substrate, by transfer printing. The system comprising at least one resin that has an hydroxyl functional polyester resin with hydroxyl value of around 48 mgKOH/g co-extruded with an hydroxyl functional polyester resin with hydroxyl value of around 290 mgKOH/g, crosslinked with self-blocked uretdione, allows to produce powder coatings suitable for dye ink sublimation exhibiting good paper detachment along with good surface appearance, low gloss, full mechanical properties and good weathering resistance.

By using this thermally curable powder coating composition, the decoration on the substrates can be very detailed and bright colours can be used without the risk of colour diffusion. The so decorated substrates are very durable and show excellent weather and outdoor resistance. Depending upon the curing temperature of the coating composition, use on heat sensitive substrates is also possible.

It was found that for an ideal transfer of the decoration from the sheet onto the coated substrate, the Tg and the hardness of the cured coating at the temperature at which the transfer of the decoration takes place are of the utmost importance. Normally, this transfer process is operated in the temperature range between 170 to 220° C.

If the Tg is too low, i.e. below 50° C, the coating will be too soft at the transfer temperature and this will camp the release of the sheet from the substrate after the transfer of the decoration, due to the softening of the coated surface.

If the Tg is too high, i.e. above 130° C, the coating will be too brittle, and the substrate will be damaged in normal use and, for some substrates, poor adhesion between the coating and the surface.

In view to achieve the optimum results in the heat transfer of a decoration, the coating that is cured must have a Tg between 85 and 115° C.

The hardness of the coating must not be too high to avoid an incomplete transfer, and not too low to cause the cramp of the transfer sheet.

The thermally curable powder coating composition according to the present invention comprises a mixture of resins wherein at least one resin has an hydroxyl functional polyester resin with hydroxyl value of around 48 mgKOH/g co-extruded with an hydroxyl functional polyester resin with hydroxyl value of around 290 mgKOH/g, crosslinked with self-blocked uretdione.

Further preference is given to the use of at least one resin with an hydroxyl number of 25 to 100mg KOH/g and preferably 40 to 55mg KOH/g combination with a resin with an hydroxy number of 200 to 350mg KOH/g.

The difference in acid value for the above resins are achieved by the use of specific acid / alcohol ratio as claimed.

An amorphous polyester containing hydroxyl groups according to the invention, is prepared from an acid constituent comprising from 20 to 100% moles of terephthalic acid, from 0 to 45% moles of at least one dicarboxylic acid or anhydride other than terephthalic acid and from 0 to 25% moles of polycarboxylic acid or anhydride containing at least three carboxyl groups and from an alcohol constituent comprising from 60 to 100% moles of neopentylglycol, from 0 to 40% moles of at least one dihydroxylated compound other than neopentilglycol glycol and from 0 to 20% moles of polyhydroxylated compound containing at least 3 hydroxyl groups and from 0,1 to 10% moles of aliphatic, cycloaliphatic or aromatic epoxy resin or epoxydised polyol with at least two glycidyl functional groups per molecule, the said amorphous polyester having a glass transition (Tg) of at least 60°C, and a hydroxyl number of 25 to 100mgKOH/g, preferably 40 to 55mgKOH/g.

Another amorphous polyester containing hydroxyl groups according to the invention, is prepared from an acid constituent comprising from 20 to 100% moles of isophthalic acid, from 0 to 45% moles of at least one dicarboxylic acid or anhydride other than isophthalic acid and from 0 to 25% moles of polycarboxylic acid or anhydride containing at least three carboxyl groups and from an alcohol constituent comprising from 60 to 100% moles of neopentylglycol, from 0 to 40% moles of at least one dihydroxylated compound other than neopentilglycol glycol and from 0 to 20% moles of polyhydroxylated compound containing at least 3 hydroxyl groups and from 0,1 to 10% moles of aliphatic, cycloaliphatic or aromatic epoxy resin or epoxydised polyol with at least two glycidyl functional groups per molecule, the said amorphous polyester having a glass transition (Tg) of at least 53°C, and a hydroxyl number of 25 to 100mgKOH/g, preferably 35 to 50mgKOH/g.

Raw materials from renewable resources could also be used as source of raw materials, like sorbitol derivatives, dimer fatty acids, glycerol (derived from the production of bio-diesel), lactic acid derivatives, fructose derivatives, mannitol derivatives, furfural derivatives, pyrazol derivatives and the like. These monomers to produce the claimed resin compositions could be use alone or in combination with petrochemical based monomers.

The examples of resins below illustrate the present invention of a coating composition suitable for decorated substrate, by transfer printing.

### Example 1

Synthesis of hydroxyl functional amorphous polyesters:
a) Two-stage synthesis:
   1st stage: A mixture of 6621 grams (63.663 moles) of neopentylglycol, 736 grams (40.889 moles) of deionized water, 422 grams (3.126 moles) of trimethylolpropane, 10158 grams (61.193 moles) of terephthalic acid, 31.6 grams of distearyl-pentaerythritol-diphosphite as antioxidant and 16.0 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 125°C where water starts to distil from the pilot reactor, then temperature is gradually raised to 240°C and maintained until a clear polyester containing hydroxyl groups is obtained with these properties: ICI viscosity (at 200°C): 3780 mPa.s, Acid Number: 13,8mgKOH/g, Hydroxyl value: 62mgKOH/g. The polyester is cooled to 220°C, then the content of the reactor is placed under vacuum (residual pressure 50 mmHg) and maintained at this temperature until a polyester bearing hydroxyl groups is obtained with these properties: 5550 mPa.s, Acid Number: 6.7mgKOH/g, Hydroxyl value: 55mgKOH/g.
   2nd stage: The polyester obtained at the first stage is cooled to 200°C, then 237 grams (1.344 moles) of Epikote 232 (Epoxy resin from Hexion Specialty Chemicals), and 30.0 grams of IRGANOX 1010 (phenolic stabilizer) are added to it. Next, the mixture is maintained to 200°C until the polyester bearing hydroxyl groups is obtained with these properties: ICI viscosity (at 200°C): 7320mPa.s, Acid Number: 1.8mgKOH/g, Hydroxyl value: 50mgKOH/g, glass transition temperature (Tg): 61.7°C (DSC at 10°C/min), number-average molecular weight (Mn): 2770 (theoretical). Then the polyester is removed from the reactor.
b) By the way of comparison, an amorphous polyester containing hydroxyl groups, rich in isophtalic acid, is also prepared according to the two-stage operating method described in a) above. It contains terephthalic acid and isophthalic acid in 1/9 w/w ratio.
   1st stage: A mixture of 6317 grams (60.74 moles) of neopentylglycol, 702 grams (39.0 moles) of deionized water, 504 grams (3.733 moles) of trimethylolpropane, 9142 grams (55.072 moles) of isophthalic acid, 1016 grams (6.120 moles) of terephthalic acid, 18.0 grams (0,123 moles) of adipic acid, 29.9 grams of distearyl-pentaerythritol-diphosphite as antioxidant and 17.2 grams of MBTO as esterification catalyst is introduced into the same reactor as example 1a and the same work conditions until a clear polyester containing hydroxyl groups is obtained with the following properties: ICI viscosity (at 200°C): 3340mPa.s, Acid Number: 14.8mgKOH/g, Hydroxyl value: 48mgKOH/g. The polyester is cooled to 220°C, then the content of the reactor is placed under vacuum (residual pressure 50 mmHg) and maintained at this temperature until a polyester bearing hydroxyl groups is obtained with these properties: 5190mPa.s, Acid Number: 6.2mgKOH/g, Hydroxyl value: 40mgKOH/g.
   2nd stage: The polyester obtained at the first stage is cooled to 200°C, then 243 grams (1.378 moles) of Epikote 232, and 29.6 grams of IRGANOX 1010 (phenolic stabilizer) are added to it. The mixture is maintained to 200°C until the polyester bearing hydroxyl groups is obtained with these properties: ICI viscosity (at 200°C): 8000mPa.s, Acid Number: 1.0 mgKOH/g, Hydroxyl value: 40 mgKOH/g, glass transition temperature (Tg): 55.0°C (DSC at 10°C/min), number-average molecular weight (Mn): 5300 (theoretical). Then the polyester is removed from the reactor.

### Example 2

Preparation of thermosetting powder compositions.

The polyurethane one shot powder coating formulations for dye ink sublimation process, where example 1a and 1b are used, are as following:

| | A | B |
|---|---|---|
| Example 1a | 504.6 | - |
| Example 1b | - | 504.6 |
| Albester 3115 * | 168 | 168 |
| Crelan LS 2147 ** | 288 | 288 |
| Resiflow PV 88 *** | 10 | 10 |
| Benzoin | 3 | 3 |
| Bayferrox 420 Yellow | 23 | 23 |
| Bayferrox 130M Red | 1 | 1 |
| Bayferrox 306 T Black | 2.2 | 2.2 |
| | | |
| Total Weight | 1000 | 1000 |
| Polyester / Crosslinker | 70 / 30 | 70 / 30 |
| Pigment / Binder | 2.5 / 97.5 | 2.5 / 97.5 |

| | | |
|---|---|---|
| *: Commercially available from Hexion Specialty Chemicals **: self-blocked uretdione (Bayer Crelan LS 2147 or Degussa Vestagon BF1320) ***: Flow control agent | | |

After hand shaking for at least 5 minutes, each of premixes is extruded in a double screw APV MP-30 extruder. The set temperatures for the three heating zones are: 20/80/90°C. After extrusion the preparations are cooled, chipped and grinded in normal coffee grinders. The grinded powder is sieved in a 106µ sieve. After sieving the coatings are separately, electrostatically sprayed on cold rolled steel panels.
The powder coated panels are baked into an air circulated oven at 200°C for 15 minutes (object temperature). The most significant application results, measured on baked panels are given in the following table.

| | A | B |
|---|---|---|
| Thickness in µ | 70-80 | 70-80 |
| Appearance | v. good | v. good |
| Gloss 60° | 12 | 16 |
| Direct impact 160 kgxcm | 160 | 120 |
| Reverse impact 160 kgxcm | 160 | 120 |

Each of the coatings has a very good performance in the dye ink sublimation process. The quality of impressed image and paper detachment are excellent.

The dye ink process, simply described is as following: the suitable paper, bearing the image is pressed between the coated panel and a hot metal plate at approx. 200°C. The process time is indicatively 1 minute. After this, the process is interrupted and a good performance of the coating means an easy detachment of the paper from the coating substrate and a very good appearance of the transferred image.

## Claims

1. A polyester resin prepared from acid constituents comprising from 20 to 100% moles of terephthalic acid, from 0 to 45% moles of at least one dicarboxylic acid or anhydride other than terephthalic acid and from 0 to 25% moles of polycarboxylic acid or anhydride containing at least three carboxyl groups and from an alcohol constituent comprising from 60 to 100% moles of neopentylglycol, from 0 to 40% moles of at least one dihydroxylated compound other than neopentilglycol glycol and from 0 to 20% moles of polyhydroxylated compound containing at least 3 hydroxyl groups and from 0,1 to 10% moles of aliphatic, cycloaliphatic or aromatic epoxy resin or epoxydised polyol with at least two glycidyl functional groups per molecule, the said amorphous polyester having a glass transition (Tg) of at least 60°C, and a hydroxyl number of 25 to 100mgKOH/g, preferably 40 to 55mgKOH/g.

2. A polyester resin prepared from acid constituents comprising from 20 to 100% moles of isophthalic acid, from 0 to 45% moles of at least one dicarboxylic acid or anhydride other than isophthalic acid and from 0 to 25% moles of polycarboxylic acid or anhydride containing at least three carboxyl groups and from an alcohol constituent comprising from 60 to 100% moles of neopentylglycol, from 0 to 40% moles of at least one dihydroxylated compound other than neopentilglycol glycol and from 0 to 20% moles of polyhydroxylated compound containing at least 3 hydroxyl groups and from 0,1 to 10% moles of aliphatic, cycloaliphatic or aromatic epoxy resin or epoxydised polyol with at least two glycidyl functional groups per molecule, the said amorphous polyester having a glass transition (Tg) of at least 53°C, and a hydroxyl number of 25 to 100mgKOH/g, preferably 35 to 50mgKOH/g.

3. A thermally curable powder coating composition comprising a blended of powder based on a hydroxy functional polyester resin with a high acid value and a hydroxy functional polyester resin with a low acid value of claim 1 and/or 2, cured with a self blocked uretdione.

4. The coating composition according to any one of the preceding claims **characterized in that** the cured coating has a Tg between 85 and 115°C.

5. The use of a coating according to claims 1 to 4 in the preparation of a decorated substrate, by dye ink sublimation technology.
